# EUROPEAN PATENT SPECIFICATION

(11) **EP 1 587 156 B1**
(45) Date of publication and mention of the grant of the patent: **12.12.2018**
(21) Application number: 03782865.4
(22) Date of filing: 22.12.2003
(51) Int. Cl.: H01M 4/58, C01G 45/00, C01G 51/06, C01G 53/06, C01G 53/00, C01G 51/00, C01G 45/12, C01B 13/18, C01G 1/02, H01M 4/505, H01M 4/525

(54) **MATERIAL FOR POSITIVE ELECTRODE OF LITHIUM SECONDARY BATTERY AND PROCESS FOR PRODUCING THE SAME**
MATERIAL FÜR POSITIVE ELEKTRODE EINER LITHIUMSEKUNDÄRBATTERIE UND HERSTELLUNGSVERFAHREN DAFÜR
MATERIAU D'ELECTRODE POSITIVE POUR ACCUMULATEUR AU LITHIUM ET PROCEDE PERMETTANT DE PRODUIRE CE MATERIAU

(30) Priority: 08.01.2003 JP 2003001955
(43) Date of publication of application: 19.10.2005
(73) Proprietor: JX Nippon Mining & Metals Corporation, Tokyo 100-8164 (JP)
(72) Inventor: KAJIYA, Yoshio, c/o Petoca Materials Ltd., Kashima-gun, Ibaraki 314-0198 (JP); TASAKI, Hiroshi, c/o Petoca Materials Ltd, Kashima-gun, Ibaraki 314-0198 (JP)
(74) Representative: Goddar, Heinz J.
(86) International application number: PCT/JP2003/016416
(87) International publication number: WO 2004/064180

(56) References cited:
- EP-A- 1 553 645
- EP-A- 1 808 918
- EP-A2- 1 225 650
- JP-A- 1 294 364
- JP-A- 5 343 066
- JP-A- 10 182 159
- JP-A- 11 154 512
- JP-A- 11 307 094
- JP-A- 11 345 615
- JP-A- 2002 313 338
- JP-A- 2002 313 338
- JP-A- 2002 321 921
- JP-A- 2005 285 572
- JP-A- 2006 004 724

## Description

### TECHNICAL FIELD

The invention relates to a precursor material for a cathode material for a lithium secondary battery, a cathode material for a lithium secondary battery, and to methods of producing a precursor material and a cathode material.

### BACKGROUND TECHNOLOGY

There has lately been seen rapid increase in demand for nonaqueous lithium ion battery (lithium secondary battery) regarded as a high energy-density battery, and researches for enhancement in performance thereof from various angles have been under way
The lithium secondary battery is comprised of three basic elements, namely, "a cathode", "an anode", and "a separator retaining an electrolyte", interposed between the cathode, and the anode. For the cathode and the anode, use is made of "a slurry prepared by mixing, and dispersing an active material, an electroconductive material, a binding agent, and a plasticizer, where necessary, into a dispersion medium", applied to a current collector, such as a metal foil, metal mesh, and so forth.
For a cathode active material among those materials, there have been used a multiple oxide of lithium and a transition metal, such as a cobalt base multiple oxide (Li₁₋ₓCoO₂), a nickel base multiple oxide (Li₁₋ₓNiO₂), and a manganese base multiple oxide (Li₁₋ₓMn₂O₄), and there have so far been proposed material shown as follows, and so forth.
a) a multiple oxide expressed by chemical formula AₓM_{y}N₂O₂ (A is at least an element selected from the group of alkaline metals, M is a transition metal, N is at least an element selected from the group consisting of Al, In, and Sn, and x, y, and z are numeric values defined by 0.05 ≤ x ≤ 1,10, 0.85 ≤ y ≤ 1.00, and 0.001 ≤ z ≤ 0,10, respectively) (refer to JP 62-90863 A)
b) a multiple oxide expressed by chemical formula Liₓ (Co_{1-y}Ni_{y})O_{z} (where x is a numeric value in a range of 0 to 2, and y is a numeric value in a range of 0.5 to 0.9) (refer to JP 1-294364 A)
c) a multiple oxide expressed by chemical formula Liₓ Co_{1-y}M_{y}O_{z} (where 0.85 ≤ x ≤ 1,3, 0.05 ≤ y ≤ 0.35, and M is at least an element selected from the group consisting of W, Mn, Ta, Ti, and Nb (refer to JP 3-201368 A)
d) a multiple oxide expressed by chemical formula Li Co_{1-z}Mn_{z}O₂ (where 0.02 ≤ x ≤ 0.35) (refer to JP 4-28162 A)
e) a multiple oxide expressed by chemical formula Li_{y} Ni₁₋ₓMnₓO₂ (where 0 ≤ x ≤ 0.3, 0 ≤ y ≤ 1.3) (refer to JP6-96768 A)
f) a multiple oxide expressed by chemical formula Li NiₓMn₁₋ₓO₂ (where 0.95 ≥ x ≥ 0.70) (refer to JP 8-171910 A)
g) a multiple oxide expressed by chemical formula Li NiₓCo₁₋ₓO₂ (where 0.95 ≥ x ≥ 0.50) (refer to JP 8-222220 A)
h) a multiple oxide expressed by chemical formula Liₓ (Co_{1-y}Ni_{y})O₂ (where 0 < x < 1, 0.75 < y ≤ 0,9) (refer to JP 8-236117 A)
i) a multiple oxide expressed by chemical formula Liₓ (Ni_{1-y}CO_{y})O₂ (where 0.95 ≤ x ≤ 1.2, 0 ≤ y ≤ 0.5) (refer to JP 9-251854 A)
j) a multiple oxide expressed by chemical formula Li Co₁₋ₚNiₚO₂ (where 0.95 ≤ p ≤ 0.9) (refer to JP 9-259884 A)
k) a multiple oxide expressed by chemical formula Liₓ Ni_{1-y} Co_{y} O₂ (where 0 ≤ x ≤ 1.2, 0 ≤ y ≤ 0.5) (refer to JP 9-270257 A)
l) a multiple oxide expressed by chemical formula Li₁₋a Ni_{1-b-c-d} Mn_{b}Co_{c} M_{d}O₂ (provided that M is at least one trace additive element, other than H and Li, selected from elements of the Groups Ia, IIa, IIb, IIIb, and IVb, respectively, and transition elements, other than Ni, Co, and Mn, where -0.15≤a≤0.10,0.02≤b≤0.45,0≤c≤0.50and0≤d≤0.20) (refer to JP 11-307094 A)

The above described lithium multiple oxides for use as the cathode material for the lithium secondary battery is generally synthesized by mixing a compound of an element serving as the main component of the cathode material for the lithium secondary battery (carbonate, oxide, and so forth, of Co, Ni, Mn, and so forth) with a lithium compound ((lithium carbonate, etc.) at a predetermined mixing ratio before heat treatment is applied thereto.

For example, in JP 1-294364 A, described as above, there is disclosed "a method of producing a layered lithium multiple oxide, comprising the steps of saturating an aqueous solution containing chlorides ofNi and Co, respectively, with carbon dioxide gas (carbonic acid gas), adding an aqueous solution of sodium bicarbonate to the aqueous solution to be subsequently left out as it is, thereby causing the respective carbonates of Ni, and Co to undergo coprecipitation, washing precipitates as obtained before drying in argon gas at 140°C, and subsequently mixing the precipitates with lithium carbonate before heating a mixture in the air to thereby cause reaction".

Further, in JP 11-307094 A, described as above, there is disclosed "a method of producing lithium multiple oxides, comprising the steps of adding an aqueous solution of sulfates of respective constituent elements other than lithium, and an aqueous solution of ammonium hydrogencarbonate, with a trace of ammonium added thereto, into a reactor cell little by little, and concurrently or alternately, causing uniform crystal growth of a multiple salt to take place in a substantially concentric manner while keeping a pH value of a mixed solution, in a neutral region, and subsequently mixing a multiple salt as obtained with lithium hydroxide to be thereby heated in an oxygen gas flowing atmosphere so as to be sintered."

The inventor, et al., however, have found out through examination on performance of lithium secondary batteries in which various lithium multiple oxides are adopted as the cathode material for the lithium secondary battery that the lithium multiple oxides used in the past are not fully satisfactory in respect of sinterability, composition stability, and so forth, leading to deterioration in battery performance (rate performance, and so forth).

JP 11345615 A discloses a precursor material for a cathode material for a lithium secondary battery, which is a mixture of NiCO₃ and Al(OH)₃, wherein an atomic ratio of Al/(Ni+Al) is 0.1 in the final cathode material. Furthermore, contents of Na in S are between 5 and 400 ppm. A cathode material for a lithium secondary battery, being LiNiAlO based multiple oxide is also disclosed.

Under the circumstances, it is an object of the invention to establish means for stable supply of a cathode material for a lithium secondary battery, excellent in sinterability, and composition stability, and capable of exhibiting satisfactory battery performance.

### DISCLOSURE OF THE INVENTION

The present invention provides a precursor material for cathode material for a lithium secondary battery according to claim 1, a cathode material for a lithium secondary battery according to claim 2, a method of producing a precursor material according to claim 3, a method of producing a precursor material according to claim 5, a method of producing a cathode material according to claim 7 and a method of producing a cathode material according to claim 8. Further embodiments are disclosed in the dependent claims.

To that end, the inventor, et al. have continued further studies, and as a result, have succeeded in obtaining the following knowledge.
(a) The more fine, and the more homogeneous a layered lithium multiple oxide for use as an active material for a cathode material for a lithium secondary battery is, the more excellent is battery performance as exhibited, however, in order to obtain a fine, and homogeneous lithium multiple oxide, raw material for production of the lithium multiple oxide need be fine, and homogeneous.
(b) As means for obtaining fine, and homogeneous lithium multiple oxide, there has been known a method of preparing fine carbonate by a wet process, and using the same as raw material, as disclosed in, for example, JP 1-294364 A, and JP 11-307094 A. However, if Na and S are contained as impurity elements in the raw material, the impurity elements have adverse effects on sinterability and composition stability, thereby creating a cause for deterioration in battery performance.
   For example, with the method disclosed in JP 1-294364 A, sodium bicarbonate is used to cause coprecipitation of the carbonates, and consequently, contamination of the carbonate by Na is unavoidable, so that upon firing for production of a layered lithium multiple oxide, a specific surface area thereof increases resulting in not only deterioration in sinterability and interference with stability in operation, but also degradation in rate performance if a product is used as a cathode material for a lithium secondary battery.
   With the method disclosed in JP 11-307094 A, described as above, since ammonium is used to cause the crystal growth of the multiple salt, nitrogen enters waste liquid, and consequently, not only costly treatment of the waste liquid is required, but also contamination of the multiple salt by sulfur (S) occurs because the aqueous solution of the sulfates is used, so that sulfur reacts with lithium to form lithium sulfide, thereby not only interfering with composition stability of the cathode material, but also inviting deterioration in battery performance.
(c) In contrast, if an aqueous solution of Ni chloride, Mn chloride, and Co chloride (or a mixed liquid of the aqueous solution described, and an aqueous solution of chloride of at least one element selected from the group consisting of Mg, Al, Ti, Cr, Fe, Cu, and Zr,) is charged into lithium carbonate suspension, thereby precipitating carbonate, if the aqueous solution of Ni chloride, Mn chloride, and Co chloride (or the mixed liquid of the aqueous solution described, and the aqueous solution of chloride of at least one element selected from the group consisting of Mg, Al, Ti, Cr, Fe, Cu, and Zr,) is dripped into an aqueous solution of lithium hydrogencarbonate prepared by blowing carbon dioxide gas (CO₂ gas) into an aqueous solution of lithium carbonate, and concurrently a pH value of the aqueous solution is raised, thereby precipitating carbonate, or if the aqueous solution of lithium hydrogencarbonate prepared by blowing carbon dioxide gas (CO₂ gas) into the aqueous solution of lithium carbonate is dripped or charged into the aqueous solution of Ni chloride, Mn chloride, and Co chloride (or the mixed liquid of the aqueous solution as described, and the aqueous solution of chloride of at least one element selected from the group consisting of Mg, Al, Ti, Cr, Fe, Cu, and Zr), and concurrently, the pH value of the aqueous solution is raised, thereby precipitating carbonate, it is possible to obtain carbonate of Ni, Mn, and Co, in ultrafine particle form, (or a mixture of the carbonate thereof, and carbonate as well as hydroxide of at least one element selected from the group consisting of Mg, Al, Ti, Cr, Fe, Cu, and Zr), without contamination by Na and S (not more than 100 ppm in mass percentage, respectively). Thereafter, the carbonate, and the mixture, obtained as above, are subjected to oxidation treatment to be turned into an oxide, and subsequently, the oxide is mixed with a lithium source (lithium carbonate, and so forth) to be thereby fired, whereupon there is obtained a layered lithium multiple oxide without contamination by Na and S (not more than 100 ppm in mass percentage, respectively), and high in tap density, and when the lithium multiple oxide is used as a cathode active material for a lithium secondary battery, the lithium secondary battery stably exhibiting excellent battery performance can be implemented. Furthermore, even in the case where the carbonate (or the mixture) obtained by dripping the aqueous solution of Ni chloride, Mn chloride, and Co chloride (or the mixed liquid of the aqueous solution as described, and the aqueous solution of the chloride of at least one element selected from the group consisting of Mg, Al, Ti, Cr, Fe, Cu, and Zr) into the aqueous solution of lithium hydrogencarbonate, and concurrently, by raising the pH value of the aqueous solution, as it is without the oxidation treatment applied thereto, and the carbonate (or the mixture) obtained by dripping, and charging the aqueous solution of lithium hydrogencarbonate into the aqueous solution of Ni chloride, Mn chloride, and Co chloride (or the mixed liquid of the aqueous solution as described, and the aqueous solution of the chloride of at least one element selected from the group consisting of Mg, Al, Ti, Cr, Fe, Cu, and Zr), and concurrently, by raising the pH value of the aqueous solution, as it is without the oxidation treatment applied thereto, are mixed with the lithium source to be thereby fired, it is possible to produce an excellent lithium multiple oxide with correspondingly little contamination by Na and S.

The invention has been developed based on above-described items of the knowledge, and so forth, providing a cathode material for a lithium secondary battery {a precursor material (carbonate and a mixture of the carbonate and hydroxide) for production of a cathode active material, and lithium multiple oxides serving as the cathode active material}, and a method of producing the same, as shown under the following items 2 through 9:
(2) a precursor material for a cathode material for a lithium secondary battery, being a mixture of carbonate expressed by chemical formula ACO₃ (where A is at least an element selected from the group consisting of Ni, Mn and Co), and either or both of carbonate expressed by chemical formula DCO₃ (where D is at least an element selected from the group consisting of Mg, Al, Ti, Cr, Fe, Cu, and Zr), and hydroxide expressed by chemical formula D(OH), an atomic ratio of an element D to the total of the element A and the element D {D / (A + D)} being in a range of 0 to 0.1, and further, respective contents of Na, and S, as impurity elements, being not more than 100 ppm in mass percentage.
(3) a cathode material for a lithium secondary battery produced by use of the precursor material as set forth in the above item (2), being an Li-A-DO based multiple oxide for the lithium secondary battery (where A is at least an element selected from the group consisting of Ni, Mn and Co, and D is at least an element selected from the group consisting of Mg, Al, Ti, Cr, Fe, Cu, and Zr), an atomic ratio of the element D to the total of the element A and the element D {D / (A + D)} being in a range of exceeding 0 to not more than 0.1, and further, respective contents of Na, and S, as impurity elements, being not more than 100 ppm in mass percentage.
(4) a method of producing a precursor material according to the invention for a cathode material for a lithium secondary battery, expressed by chemical formula ACO₃ (where A is at least an element selected from the group consisting of Ni, Mn and Co) with respective contents of Na, and S, as impurity elements, at not more than 100 ppm in mass percentage, said method comprising the steps of charging an aqueous solution containing at least one chloride selected from the group consisting of Ni chloride, Mn chloride, and Co chloride into lithium carbonate suspension, and precipitating carbonate.
(5) the method of producing a precursor material for a cathode material for a lithium secondary battery as set forth in the above item (4), being a mixture of carbonate expressed by chemical formula ACO₃ (where A is at least an element selected from the group consisting of Ni, Mn and Co), and either or both of carbonate expressed by chemical formula DCO₃ (where D is at least an element selected from the group consisting of Mg, Al, Ti, Cr, Fe, Cu, and Zr), and hydroxide expressed by chemical formula D(OH), an atomic ratio of an element D to the total of the element A and the element D {D / (A + D)} being in a range of 0 to 0.1, and further, respective contents of Na, and S, as impurity elements, being not more than 100 ppm in mass percentage, said method comprising the steps of charging a mixed liquid composed of an aqueous solution containing at least one chloride selected from the group consisting of Ni chloride, Mn chloride, and Co chloride, and an aqueous solution of at least one chloride selected from the group consisting of Mg chloride, Al chloride, Ti chloride, Cr chloride, Fe chloride, Cu chloride, and Zr chloride into lithium carbonate suspension, and precipitating carbonate, or carbonate, and hydroxide.
(6) a method of producing a precursor material for a cathode material according to the present invention for a lithium secondary battery, composed of a carbonate expressed by chemical formula ACO₃ (where A is at least an element selected from the group consisting of Ni, Mn and Co) with respective contents of Na, and S, as impurity elements, at not more than 100 ppm in mass percentage, said method comprising the steps of preparing an aqueous solution of lithium hydrogencarbonate by blowing carbon dioxide gas into an aqueous solution of lithium carbonate, dripping an aqueous solution containing at least one chloride selected from the group consisting of Ni chloride, Mn chloride, and Co chloride to the aqueous solution of lithium hydrogencarbonate, or dripping or charging the aqueous solution of lithium hydrogencarbonate into the aqueous solution containing at least one chloride selected from the group consisting of Ni chloride, Mn chloride, and Co chloride, and subsequently driving out dissolved carbon dioxide gas by aerating the aqueous solution, thereby raising a pH value of the aqueous solution to cause carbonate to be precipitated.
(7) a method of producing a precursor material for a cathode material for a lithium secondary battery as set forth in the above item (6), being a mixture of carbonate expressed by chemical formula ACO₃ (where A is at least an element selected from the group consisting of Ni, Mn and Co), and either or both of carbonate expressed by chemical formula DCO₃ (where D is at least an element selected from the group consisting of Mg, Al, Ti, Cr, Fe, Cu, and Zr), and hydroxide expressed by chemical formula D(OH), an atomic ratio of an element D to the total of the element A and the element D {D / (A + D)} being in a range of 0 to 0.1, and further, respective contents of Na, and S, as impurity elements, being not more than 100 ppm in mass percentage, said method comprising the steps of preparing an aqueous solution of lithium hydrogencarbonate by blowing carbon dioxide gas into an aqueous solution of lithium carbonate, dripping a mixed liquid of an aqueous solution containing at least one chloride selected from the group consisting of Ni chloride, Mn chloride, and Co chloride, and an aqueous solution of at least one chloride selected from the group consisting of Mg chloride, Al chloride, Ti chloride, Cr chloride, Fe chloride, Cu chloride, and Zr chloride to the aqueous solution of lithium hydrogencarbonate, or dripping or charging the aqueous solution of lithium hydrogencarbonate into the mixed liquid of the aqueous solution containing at least one chloride selected from the group consisting of Ni chloride, Mn chloride, and Co chloride, and the aqueous solution of at least one chloride selected from the group consisting of Mg chloride, Al chloride, Ti chloride, Cr chloride, Fe chloride, Cu chloride, and Zr chloride, and subsequently, driving out dissolved carbon dioxide gas by aerating the aqueous solution, thereby raising a pH value of the aqueous solution to cause carbonate to be precipitated.
(8) a method of producing a cathode material according to the present invention for a lithium secondary battery, being an Li-A-D-O based multiple oxide for the lithium secondary battery (where A is at least an element selected from the group consisting of Ni, Mn and Co, and D is at least an element selected from the group consisting of Mg, Al, Ti, Cr, Fe, Cu, and Zr), an atomic ratio of the element D to the total of the element A and the element D {D / (A + D)} being in a range of 0 to 0.1, and further, respective contents ofNa, and S, as impurity elements, being not more than 100 ppm in mass percentage, said method comprising the steps of charging a mixed liquid of an aqueous solution containing at least one chloride selected from the group consisting of Ni chloride, Mn chloride, and Co chloride, and an aqueous solution of at least one chloride selected from the group consisting of Mg chloride, Al chloride, Ti chloride, Cr chloride, Fe chloride, Cu chloride, and Zr chloride into lithium carbonate suspension, thereby precipitating carbonate, or carbonate, and hydroxide, and subsequently, mixing precipitate as obtained with a lithium source before firing, or applying oxidation treatment to the precipitate as obtained to be turned into an oxide, the oxide being mixed with the lithium source before firing.
(9) a method of producing a cathode material according to the present invention for a lithium secondary battery, being an Li-A-D-O based a multiple oxide for the lithium secondary battery (where A is at least an element selected from the group consisting of Ni, Mn and Co, and D is at least an element selected from the group consisting of Mg, Al, Ti, Cr, Fe, Cu, and Zr), an atomic ratio of the element D to the total of the element A and the element D {D / (A + D)} being in a range of 0 to 0.1, and further, respective contents of Na, and S, as impurity elements, being not more than 100 ppm in mass percentage, said method comprising the steps of preparing an aqueous solution of lithium hydrogencarbonate by blowing carbon dioxide gas into an aqueous solution of lithium carbonate, dripping a mixed liquid of an aqueous solution containing at least one chloride selected from the group consisting of Ni chloride, Mn chloride, and Co chloride, and an aqueous solution of at least one chloride selected from the group consisting of Mg chloride, Al chloride, Ti chloride, Cr chloride, Fe chloride, Cu chloride, and Zr chloride to the aqueous solution of lithium hydrogencarbonate, or dripping or charging the aqueous solution of lithium hydrogencarbonate into the mixed liquid of the aqueous solution containing at least one chloride selected from the group consisting of Ni chloride, Mn chloride, and Co chloride, and the aqueous solution of at least one chloride selected from the group consisting of Mg chloride, Al chloride, Ti chloride, Cr chloride, Fe chloride, Cu chloride, and Zr chloride, subsequently, driving out dissolved carbon dioxide gas by aerating the aqueous solution, thereby raising a pH value of the aqueous solution to cause carbonate, or carbonate and hydroxide to be precipitated, and mixing precipitate as obtained with a lithium source before firing, or applying oxidation treatment to the precipitate as obtained to be turned into an oxide, the oxide being mixed with the lithium source before firing.

### BEST FORM FOR CARRYING OUT THE INVENTION

In a cathode material for a lithium secondary battery (a precursor material for production of a cathode active material, and the cathode active material), according to the invention, respective contents of Na, and S, as impurity elements, are set to 100 ppm or less because if Na content in any material (carbonates, and so forth, and lithium multiple oxides) exceeds .100 ppm, deterioration in battery performance becomes pronounced due to degradation in sinterability when the material is used as the cathode active material for the lithium secondary battery, and meanwhile, if S content in any material (carbonates, and so forth, and lithium multiple oxides) exceeds 100 ppm, deterioration in battery performance also becomes pronounced due to interference with stability in material composition through formation of lithium sulfide.

Further, in order to secure excellent battery performance by stabilizing crystals of the cathode active material for the lithium secondary battery, as produced, the cathode active material for the lithium secondary battery may contain at least one element selected from the group consisting of Mg, Al, Ti, Cr, Fe, Cu, and Zr, and accordingly, a precursor material of the cathode active material for the lithium secondary battery may contain at least one element selected from the group consisting of Mg, Al, Ti, Cr, Fe, Cu, and Zr. In this case, however, if a ratio of total content of Mg, Al, Ti, Cr, Fe, Cu, or Zr to the sum of total content of Ni, Mn, or Co, as the main element of the cathode active material, and the precursor material, and the total content of Mg, Al, Ti, Cr, Fe, Cu, or Zr exceeds of 0.1 in atomic ratio, there will be shown a tendency of battery performance rather undergoing deterioration, so that precautions should be taken such that the ratio of the total content of Mg, Al, Ti, Cr, Fe, Cu, or Zr to the sum of the total content of Ni, Mn, or Co, and the total content of Mg, Al, Ti, Cr, Fe, Cu, or Zr falls in a range of 0 to 0.1 in atomic ratio.

Now, in producing a carbonate for use in the cathode material for the lithium secondary battery according to the method of the invention, lithium carbonate suspension is first prepared, or an aqueous solution of lithium hydrogencarbonate is prepared by blowing carbon dioxide gas (CO₂ gas) into an aqueous solution of lithium carbonate.

Appropriate concentration of lithium carbonate in a liquid to be prepared is in a range of about 20 to 600 g /ℓ. In the case of preparing the aqueous solution of lithium hydrogencarbonate, lithium carbonate concentration is preferably on the order of 30 g /ℓ, and in the case of preparing the suspension, the same is preferably on the order of 400 g /ℓ.

Since lithium hydrogencarbonate is an unstable substance, a process of preparing the aqueous solution of lithium hydrogencarbonate by blowing carbon dioxide gas into the aqueous solution of lithium carbonate is preferably executed immediately before the production of the carbonate for use in the cathode material for the lithium secondary battery.

Subsequently, an aqueous solution with a desired composition of Ni chloride, Mn chloride, and Co chloride is charged or dripped into the lithium carbonate suspension, as adjusted or the aqueous solution of lithium hydrogencarbonate, as adjusted, or the aqueous solution of lithium hydrogencarbonate is dripped or charged into the aqueous solution with the desired composition of Ni chloride, Mn chloride, and Co chloride. In this case, a small amount of an aqueous solution of a chloride of a different kind of metal, such as Mg, Al, Ti, Cr, Fe, Cu, Zr, Si, Ca, or so on, may be added thereto.

The aqueous solution of the chlorides, for use, may be adjusted in composition by modifying a blending ratio among the Ni chloride, Mn chloride, and Co chloride according to "composition of a carbonate to be produced", and depending on a carbonate to be obtained, the aqueous solution may be an aqueous solution of one of the Ni chloride, Mn chloride, and Co chloride, alone.

In this case, appropriate chloride concentration in the aqueous solution of the chlorides, is from 1.0 to 5.0 mol/ℓ in terms of total concentration of chlorides of Ni, Mn, Co, respectively, and an additive element, preferably from 1.5 to 3.0 mol/ℓ.

A dripping rate, or charging rate of the solution is preferably adjusted such that a total addition amount is added in from 10 minutes to 2 hours. For example, when the aqueous solution of the chlorides at a ratio of 30 liter in total addition amount is dripped into 140 liter of the aqueous solution of lithium hydrogencarbonate, the dripping rate is set to around 30 ℓ/hr. Further, when 50 liter of the aqueous solution of the chlorides is charged into 75 liter of the lithium carbonate suspension (lithium carbonate: 180 g /ℓ), 50 liter thereof is charged in around 30 minutes. In the case of dripping or charging 140 liter of the aqueous solution of lithium hydrogencarbonate into 30 liter of the aqueous solution of the chlorides, the dripping or charging rate is set to on the order of 100 ℓ/hr.

As for liquid temperature, either of the solutions is may be at room temperature, but may be heated up. Further, when dripping (charging) the aqueous solution of the chlorides, the lithium carbonate suspension (the aqueous solution of lithium hydrogencarbonate) is preferably stirred at a stirring rate of 50 to 400 rpm. The stirring rate is decided upon according to a reactor cell.

Depending on the dripping (charging) rate, and stirring rate, carbonate of desired grain size can be obtained. It is preferable from the viewpoint of better stability in operation to adopt a batch method in carrying out dripping (charging) of the aqueous solution of the chlorides into the lithium carbonate suspension (the aqueous solution of lithium hydrogencarbonate) as prepared. However, a process may be adopted whereby while the aqueous solution of lithium hydrogencarbonate is continuously prepared by blowing carbon dioxide gas into the aqueous solution of lithium carbonate, the aqueous solution of the chlorides is continuously dripped (continuously added) into the aqueous solution of lithium hydrogencarbonate, as prepared,

Next, in the case of dripping the aqueous solution of the chlorides into the aqueous solution of lithium hydrogencarbonate, or in the case of dripping or charging lithium hydrogencarbonate into the aqueous solution of the chlorides, dissolved carbon dioxide gas is driven out (expelled) by aerating the solution after the other solution is dripped or added thereto, thereby raising a pH value of the aqueous solution (raising the pH value from about 6.7 to about 8.3) to cause carbonate to be precipitated.

In this case, because carbonates of Ni, Mn, and Co, respectively, occurring by reaction between the aqueous solution of lithium hydrogencarbonate and the aqueous solution of the chlorides, have solubility against the solution present around the carbonates, and are resolved in the solution, it is necessary for implementing satisfactory precipitation of the carbonates to raise a pH value by driving out the carbon dioxide gas dissolved. As a method of driving out the carbon dioxide dissolved, "a method of heating solution", "a method of adding alkali", and so forth may be adopted, howvever, an aerating method, which is the simplest and inexpensive method, is regarded preferable from an industrial point of view.

In the case of charging the aqueous solution of the chlorides into the lithium carbonate suspension, reaction occurs at a higher pH value, so that there is no need for driving out the carbon dioxide gas by aeration. Accordingly, carbonate as desired can be very simply obtained.

In other words, with the use of the lithium carbonate suspension, yield per batch can be further enhanced.

With the process described as above, it is possible to obtain carbonate in fine particle form, 5 to 10 µm in average grain size, with Na content, and S content, not more than 100 ppm, respectively.

The carbonate in fine particle form, obtained as above, is subjected to oxidation treatment (firing in an oxidizing atmosphere, and so forth) according the conventional method to be turned into an oxide, and the oxide is mixed with a lithium source (lithium carbonate, and so forth) to be thereby fired, whereupon there is obtained a layered lithium multiple oxide not more than 100 ppm in Na content, and S content, respectively, and high in tap density, and when the lithium multiple oxide is used as a cathode material (active material) for a lithium secondary battery, a lithium secondary battery excellent in battery performance (rate performance) can be implemented.

In production of the lithium multiple oxide described as above, the carbonate in fine particle form, as it is, without the oxidation treatment applied thereto, may be mixed with the lithium source to be thereby fired.

Further, Li-A-O (where A is at least an element selected from the group consisting of Ni, Mn and Co) based multiple oxides for a cathode of a lithium secondary battery is effective for enhancement in battery performance if the respective contents of Na, and S are set to 100 ppm or less.

Now, the invention is described hereinafter with reference to working examples.

### (Working Example 1)

First. 0.4 liter of lithium carbonate suspension with lithium carbonate suspended in water (lithium carbonate concentration: 420 g/ℓ) was prepared.

Next, while stirring the lithium carbonate suspension (at room temperature) at 300 rpm, 0.6 liter of an aqueous solution of a chloride of Ni, Mn, and Co, with composition of Ni : Mn: Co at 1 : 1 : 1 (the aqueous solution at room temperature, containing the chloride of Ni, Mn, and Co, at 2.9 mol/Q in total concentration) was added to the lithium carbonate suspension at an addition rate of 0.3 ℓ/hr.

As a result of processing described, precipitate in fine particle form was precipitated in the solution, and upon examination of material in fine particle form, obtained by filtering and separating the precipitate to be subsequently further washed and dried, it was confirmed that the material in fine particle form was a multiple carbonate 10.0 µm in average grain size, with composition of Ni : Mn : Co at 1 : 1 : 1.

Further, in the multiple carbonate, obtained as above, Na content was found at not more than 20 ppm and S content was found at not more than 10 ppm.

Subsequently, heat treatment at 650°C was applied to the multiple carbonate, obtained as above, for 15 hrs, whereupon there was obtained a multiple oxide in fine particle (10 µm in average grain size) with composition of Ni : Mn : Co at 1 : 1 : 1.

By mixing 100 g of the multiple oxide with 45.3 g of lithium carbonate, a mixture was obtained, and the mixture was fired in the air at 1050°C for 5 hrs.

Measurements on powders of a compound obtained as above were made by the powder X-ray diffraction method, whereupon it was confirmed that the powders represented a layered lithium multiple oxide expressed by chemical formula Li Ni_{0.33}Mn_{0.33}Co_{0.33}O₂.

Further, the lithium multiple oxide powders were found at 9.8 µm in average grain size, and 0.4 m² / g in specific surface area, and Na content in the powders was 20 ppm while S content in the powders was on the order of not more than 10 ppm.

Then, examinations were conducted on the characteristics of a lithium secondary battery in which the lithium multiple oxide obtained as above was adopted as a cathode active material for the lithium secondary battery.

In conducting the examinations, slurry composed of 85 wt. % of the lithium multiple oxide obtained as the active material, 8 wt. % of acetylene black, and 7 wt. % of PVDF (polyvinylidene fluoride) was prepared by use of NMP (N - methyl - pyrrolidone) as a solvent, and the slurry was applied to an aluminum foil to be subsequently dried before press forming, thereby having obtained a cathode sample for use in evaluation of the lithium secondary battery.

The lithium secondary battery for use in the evaluation was a coin-battery model of 2032 type wherein the cathode sample was used for the cathode thereof while a lithium foil was used for an opposite electrode thereof, and for an electrolyte thereof, use was made of a solvent where a ratio of EC (ethylene carbonate) / DMC (dimethyl crbonate) was at 1 : 1, in which LiPF₆ at 1 mol was dissolved.

Using the lithium secondary battery for the evaluation, discharge capacity, and current load performance (discharge capacity obtained at 0.5C / discharge capacity obtained at 0.2C) were examined, and examination results are shown in Table 1.

**Table 1**

| | results of examinations | |
|---|---|---|
| | discharge capacity (mAh / g) | current load performance (discharge capacity obtained at 0.5C / discharge capacity obtained at 0.2C) |
| working example 1 | 152 | > 98 |
| working example 2 | 152 | > 98 |
| working example 3 | 152 | > 98 |
| working example 4 | 165 | 97 |
| working example 5 | 166 | 96 |
| comparative example 1 | 125 | 75 |
| working example 6 | 152 | > 98 |
| working example 7 | 150 | > 98 |

### (Working Example 2)

Lithium carbonate was dissolved into water to prepare an aqueous solution of lithium carbonate, into which carbon dioxide gas was blown, having thereby prepared 140 liter of an aqueous solution of lithium hydrogencarbonate with lithium carbonate concentration at 30 g /ℓ.

Subsequently, while stirring the aqueous solution of lithium hydrogencarbonate (at room temperature) at 300 rpm, 30 liter of an aqueous solution of a chloride of Ni, Mn, and Co, with composition of Ni : Mn : Co at 1 : 1 : 1 (the aqueous solution at room temperature containing the chloride of Ni, Mn, and Co, at 1.5 mol/ℓ in total concentration) was dripped into the aqueous solution of lithium hydrogencarbonate at an addition rate of 30 ℓ /hr.

Next, through the intermediary of a vent pipe, air was passed at a flow rate of 10 ℓ/min through the solution to which addition of the aqueous solution of the chloride was completed, and the carbon dioxide gas dissolved in the solution was driven out, having thereby raised a pH value from 6.7 to 8.3.

As a result of processing described, precipitate in fine particle form was precipitated in the solution, and upon examination of material in fine particle form, obtained by filtering and separating the precipitate to be subsequently further washed and dried, it was confirmed that the material in fine particle form was a multiple carbonate 7 µm in average grain size, with composition of Ni : Mn: Co at 1 : 1 : 1.

Further, in the multiple carbonate, obtained as above, Na content was found in a range of 10 to 50 ppm, and S content was found at not more than 10 ppm.

Subsequently, heat treatment at 650°C was applied to the multiple carbonate, obtained as above, for 15 hrs, whereupon there was obtained a multiple oxide in fine particles (7 µm in average grain size) with composition of Ni : Mn : Co at 1 : 1 : 1.

By mixing 100 g of the multiple oxide with 45.3 g of lithium carbonate, a mixture was obtained, and the mixture was fired in the air at 1050°C for 5 hrs.

Measurements on powders of a compound obtained as above were made by the powder x-ray diffraction method, whereupon it was confirmed that the powders represented a layered lithium multiple oxide expressed by chemical formula Li Ni_{0.33} Mn_{0.33}CO_{0.33}O₂.

Further, the lithium multiple oxide powders were found at 7 µm in average grain size, and 0.4 m² / g in specific surface area, and Na content in the powders was in a range of 10 to 50 ppm while S content in the powders was on the order of not more than 10 ppm.

Then, examinations were conducted on the characteristics of a lithium secondary battery in which the lithium multiple oxide obtained as above was adopted as a cathode active material for the lithium secondary battery.

In conducting the examinations, slurry composed of 85 wt. % of the lithium multiple oxide obtained as the active material, 8 wt. % of acetylene black, and 7 wt. % of PVDF (polyvinylidene fluoride) was prepared by use of NMP (N - methyl - pyrrolidone) as a solvent, and the slurry was applied to a aluminum foil, to be subsequently dried before press forming, thereby having obtained a cathode sample for use in evaluation of the lithium secondary battery.

The lithium secondary battery for use in the evaluation was the coin-battery model of 2032 type wherein the cathode sample was used for the cathode thereof while a lithium foil was used for an opposite electrode thereof, and for an electrolyte thereof, use was made of a solvent where a ratio of EC (ethylene carbonate) / DMC (dimethyl crbonate) was at 1 : 1, in which LiPF₆ at 1 mol was dissolved.

Using the lithium secondary battery for the evaluation, discharge capacity, and current load performance (discharge capacity obtained at 0.5C/discharge capacity obtained at 0.2C) were examined, and examination results, together with results for other lithium secondary batteries, are shown in Table 1.

### (Working Example 3)

Lithium carbonate was dissolved into water to prepare an aqueous solution of lithium carbonate, into which carbon dioxide gas was blown, having thereby prepared 140 liter of an aqueous solution of lithium hydrogencarbonate with lithium carbonate concentration at 30 g /ℓ.

Subsequently, while stirring the aqueous solution of lithium hydrogencarbonate (at room temperature) at 300 rpm, 30 liter of an aqueous solution of a chloride of Ni, Mn, and Co, with composition of Ni : Mn : Co at 4 : 4 : 2 (the aqueous solution at room temperature, containing the chloride of Ni, Mn, and Co, at 1.5 mol/ℓ in total concentration) was dripped into the aqueous solution of lithium hydrogencarbonate at an addition rate of 30 ℓ /hr.

Next, through the intermediary of a vent pipe, air was passed at a flow rate of 10 ℓ/ min through the solution to which addition of the aqueous solution of the chloride was completed, and the carbon dioxide gas dissolved in the solution was driven out, having thereby raised a pH value from 6.7 to 8.3.

As a result of processing described, precipitate in fine particle form was precipitated in the solution, and upon examination of material in fine particle form, obtained by filtering and separating the precipitate to be subsequently further washed and dried, it was confirmed that the material in fine particle form was a multiple carbonate 7 µm in average grain size, with composition of Ni : Mn : Co at 4 : 4 : 2.

Further, in the multiple carbonate, obtained as above, Na content was found in a range of 10 to 50 ppm, and S content was found at 20 ppm.

Subsequently, heat treatment at 650°C was applied to the multiple carbonate, obtained as above, for 15 hrs, whereupon there was obtained a multiple oxide in fine particles (6 µm in average grain size) with composition of Ni : Mn : Co at 4 : 4 : 2.

By mixing 100 g of the multiple oxide with 45.1 g of lithium carbonate, a mixture was obtained, and the mixture was fired in the air at 1000°C for 10 hrs.

Measurements on powders of a compound obtained as above were made by the powder x-ray diffraction method, whereupon it was confirmed that the powders represented a layered lithium multiple oxide expressed by chemical formula Li Ni_{0.4}Mn_{0.4}Co_{0.2}O₂.

Further, the lithium multiple oxide powders were found at 6 µm in average grain size, and 0.7 m² / g in specific surface area, and Na content in the powders was in a range of 10 to 60 ppm while S content in the powders was 30 ppm.

Then, examinations were conducted on the characteristics of a lithium secondary battery in which the lithium multiple oxide obtained as above was adopted as a cathode active material for the lithium secondary battery.

In conducting the examinations, slurry composed of 85 wt. % of the lithium multiple oxide obtained as the active material, 8 wt. % of acetylene black, and 7 wt. % of PVDF (polyvinylidene fluoride) was prepared by use of NMP (N - methyl - pyrrolidone) as a solvent, and the slurry was applied to a aluminum foil, to be dried before press forming, thereby having obtained a cathode sample for use in evaluation of the lithium secondary battery.

The lithium secondary battery for use in the evaluation was the coin-battery model of 2032 type wherein the cathode sample was used for the cathode thereof while a lithium foil was used for an opposite electrode thereof, and for an electrolyte thereof, use was made of a solvent where a ratio of EC (ethylene carbonate) / DMC (dimethyl crbonate) was at 1 : 1, in which LiPF₆ at 1 mol was dissolved.

Using the lithium secondary battery for the evaluation, discharge capacity, and current load performance (discharge capacity obtained at discharge capacity obtained at 0.2C) were examined, and examination 0.5C / results, together with results for other lithium secondary batteries, are shown in Table 1.

### (Working Example 4)

Lithium carbonate was dissolved into water to prepare an aqueous solution of lithium carbonate, into which carbon dioxide gas was blown, having thereby prepared 140 liter of an aqueous solution of lithium hydrogencarbonate with lithium carbonate concentration at 30 g /ℓ.

Subsequently, while stirring the aqueous solution of lithium hydrogencarbonate (at room temperature) at 300 rpm, 30 liter of an aqueous solution of a chloride of Ni, Mn, and Co, with composition of Ni : Mn : Co at 6 : 3 : 1 (the aqueous solution at room temperature, containing the chloride of Ni, Mn, and Co, at 1.5 mol/ℓ in total concentration) was dripped into the aqueous solution of lithium hydrogencarbonate at an addition rate of 30 ℓ /hr.

Next, through the intermediary of a vent pipe, air was passed at a flow rate of 10 ℓ/ min through the solution to which addition of the aqueous solution of the chloride was completed, and the carbon dioxide gas dissolved in the solution was driven out, having thereby raised a pH value from 6.7 to 8.3.

As a result of processing described, precipitate in fine particle form was precipitated in the solution, and upon examination of material in fine particle form, obtained by filtering and separating the precipitate to be subsequently further washed and dried, it was confirmed that the material in fine particle form was a multiple carbonate 7 µm in average grain size, with composition of Ni : Mn : Co at 6 : 3 : 1.

Further, in the multiple carbonate, obtained as above, Na content was found at 30 ppm, and S content also was found at 30 ppm.

Subsequently, heat treatment in the air at 650°C was applied to the multiple carbonate, obtained as above, for 15 hrs, whereupon there was obtained a multiple oxide in fine particles (7 µm in average grain size) with composition of Ni : Mn : Co at 6 : 3 : 1.

By mixing 100 g of the multiple oxide with 47.3 g of lithium carbonate, a mixture was obtained, and the mixture was fired in the air at 900°C for 10 hrs.

Measurements on powders of a compound obtained as above were made by the powder x-ray diffraction method, whereupon it was confirmed that the powders represented a layered lithium multiple oxide expressed by chemical formula Li Ni_{0.6}Mn_{0.3}Co_{0.1}O₂.

Further, the lithium multiple oxide powders were found at 7 µm in average grain size, and 0.6 m² / g in specific surface area, and Na content in the powders was at 30 ppm while S content in the powders was 40 ppm.

Then, examinations were conducted on the characteristics of a lithium secondary battery in which the lithium multiple oxide obtained as above was adopted as a cathode active material for the lithium secondary battery.

In conducting the examinations, slurry composed of 85 wt. % of the lithium multiple oxide obtained as the active material, 8 wt. % of acetylene black, and 7 wt. % of PVDF (polyvinylidene fluoride) was prepared by use of NMP (N - methyl - pyrrolidone) as a solvent, and the slurry was applied to a aluminum foil to be subsequently dried before press forming, thereby having obtained a cathode sample for use in evaluation of the lithium secondary battery.

The lithium secondary battery for use in the evaluation was the coin-battery model of 2032 type wherein the cathode sample was used for the cathode thereof while a lithium foil was used for an opposite electrode thereof, and for an electrolyte thereof, use was made of a solvent where a ratio of EC (ethylene carbonate) / DMC (dimethyl crbonate) was at 1 : 1, in which LiPF₆ at 1 mol was dissolved.

Using the lithium secondary battery for the evaluation, discharge capacity, and current load performance (discharge capacity obtained at 0.5C / discharge capacity obtained at 0.2C) were examined, and examination results, together with results for other lithium secondary batteries, are shown in Table 1.

### (Working Example 5)

Lithium carbonate was dissolved into water to prepare an aqueous solution of lithium carbonate, into which carbon dioxide gas was blown, having thereby prepared 140 liter of an aqueous solution of lithium hydrogencarbonate with lithium carbonate concentration at 30 g/ℓ.

Subsequently, while stirring the aqueous solution of lithium hydrogencarbonate (at room temperature) at 300 rpm, 30 liter of an aqueous solution of a chloride of Ni, Mn, and Co, with composition of Ni : Mn : Co at 5 : 3 : 2 (the aqueous solution at room temperature, containing the chloride of Ni, Mn, and Co, at 1.5 mol/ℓ in total concentration) was dripped into the aqueous solution of lithium hydrogencarbonate at an addition rate of 30 ℓ /hr.

Next, through the intermediary of a vent pipe, air was passed at a flow rate of 10 ℓ/ min through the solution to which addition of the aqueous solution of the chloride was completed, and the carbon dioxide gas dissolved in the solution was driven out, having thereby raised a pH value from 6.7 to 8.3.

As a result of processing described, precipitate in fine particle form was precipitated in the solution, and upon examination of material in fine particle form, obtained by filtering and separating the precipitate to be subsequently further washed and dried, it was confirmed that the material in fine particle form was a multiple carbonate 7 µm in average grain size, with composition of Ni : Mn : Co at 5 : 3 : 2.

Further, in the multiple carbonate, obtained as above, Na content was found at 40 ppm, and S content also was found at 20 ppm.

Subsequently, heat treatment in the air at 650°C was applied to the multiple carbonate, obtained as above, for 15 hrs, whereupon there was obtained a multiple oxide in fine particles (6 µm in average grain size) with composition of Ni : Mn : Co at 5 : 3 : 2.

By mixing 100 g of the multiple oxide with 45.9 g of lithium carbonate, a mixture was obtained, and the mixture was fired in the air at 900°C for 10 hrs.

Measurements on powders of a compound obtained as above were made by the powder x-ray diffraction method, whereupon it was confirmed that the powders represented a layered lithium multiple oxide expressed by chemical formula Li Ni_{0.5}Mn_{0.3}Co_{0.2}O₂.

Further, the lithium multiple oxide powders were found at 6 µm in average grain size, and 0.5 m² / g in specific surface area, and Na content in the powders was at 50 ppm while S content in the powders was 20 ppm.
Then, examinations were conducted on the characteristics of a lithium secondary battery in which the lithium multiple oxide obtained as above was adopted as a cathode active material for the lithium secondary battery.

In conducting the examinations, slurry composed of 85 wt. % of the lithium multiple oxide obtained as the active material, 8 wt. % of acetylene black, and 7 wt. % of PVDF (polyvinylidene fluoride) was prepared by use of NMP (N - methyl - pyrrolidone) as a solvent, and the slurry was applied to a aluminum foil to be subsequently dried before press forming, thereby having obtained a cathode sample for use in evaluation of the lithium secondary battery.

The lithium secondary battery for use in the evaluation was the coin-battery model of 2032 type wherein the cathode sample was used for the cathode thereof while a lithium foil was used for an opposite electrode thereof, and for an electrolyte thereof, use was made of a solvent where a ratio of EC (ethylene carbonate) / DMC (dimethyl crbonate) was at 1 : 1, in which LiPF₆ at 1 mol was dissolved.

Using the lithium secondary battery for the evaluation, discharge capacity, and current load performance (discharge capacity obtained at 0.5C / discharge capacity obtained at 0.2C) were examined, and examination results, together with results for other lithium secondary batteries, are shown in Table 1.

### (Comparative Example 1)

Mixed powders prepared by mixing 37.3 g of NiO, 39.5 g of Mn₂O₃, 40.1 g of Co₃O₄, and 18.5 g of Li₃CO₃, and the mixed powders were fired at 1.000°C for 1.0 hrs.

Subsequently, the mixed powders as fired were pulverized, having thereby obtained a layered lithium multiple oxide in fine particle form of 7 µm in average grain. In the lithium multiple oxide powders, Na content was found at 300 ppm, and S content was found at 3000 ppm.

Subsequently, examinations were conducted on the characteristics of a lithium secondary battery in which the lithium multiple oxide obtained as above was adopted as a cathode active material for the lithium secondary battery.

In conducting the examinations, slurry composed of 85 wt. % of the lithium multiple oxide obtained as the active material, 8 wt. % of acetylene black, and 7 wt. % of PVDF (polyvinylidene fluoride) was prepared by use of NMP (N - methyl - pyrrolidone) as a solvent, and the slurry was applied to a aluminum foil to be subsequently dried before press forming, thereby having obtained a cathode sample for use in evaluation of the lithium secondary battery.

The lithium secondary battery for use in the evaluation was the coin-battery model of 2032 type wherein the cathode sample was used for the cathode thereof while a lithium foil was used for an opposite electrode thereof, and for an electrolyte thereof, use was made of a solvent where a ratio of EC (ethylene carbonate) / DMC (dimethyl crbonate) was at 1 : 1, in which LiPF₆ at 1 mol was dissolved.

Using the lithium secondary battery for the evaluation, discharge capacity, and current load performance (discharge capacity obtained at 0.5C / discharge capacity obtained at 0.2C) were examined, and examination results, together with results for other lithium secondary batteries, are shown in Table 1,

### (Working Example 6)

Lithium carbonate was dissolved into water to prepare an aqueous solution of lithium hydrogencarbonate, into which carbon dioxide gas was blown, having thereby prepared 140 liter of an aqueous solution of lithium hydrogencarbonate with lithium carbonate concentration at 30 g/ℓ.

Subsequently, while stirring 30 liter of an aqueous solution of a chloride of Ni, Mn, and Co, with composition of Ni : Mn : Co at 1 : 1 : 1 (the aqueous solution at room temperature, containing the chloride of Ni, Mn, and Co at 1.5 mol/ℓ in total concentration) at 300 rpm, the aqueous solution of lithium hydrogencarbonate (at room temperature), was charged into the aqueous solution of the chloride of Ni, Mn, and Co at a rate of 70 ℓ/hr.

Next, through the intermediary of a vent pipe, air was passed at a flow rate of 10 ℓ/min through the solution to which addition of the aqueous solution of lithium hydrogencarbonate was completed, and the carbon dioxide gas dissolved in the solution was driven out, having thereby raised a pH value from 6.9 to 8.0.

As a result of processing described, precipitate in fine particle form was precipitated in the solution, and upon examination of material in fine particle form, obtained by filtering and separating the precipitate to be subsequently further washed and dried, it was confirmed that the material in fine particle form was a multiple carbonate 10 µm in average grain size, with composition of Ni : Mn : Co at 1 : 1 : 1.

Further, in the multiple carbonate, obtained as above, Na content was found in a range of 20 to 50 ppm, and S content was found at not more than 20 ppm. Subsequently, heat treatment at 650°C was applied to the multiple carbonate obtained as above for 15 hrs, whereupon there was obtained a multiple oxide 10 µm in average grain size) with composition of Ni : Mn : Co at 1 : 1 : 1.

By mixing 100 g of the multiple oxide with 45.3 g of lithium carbonate, a mixture was obtained, and the mixture was fired in the air at 1050°C for 5 hrs.

Measurements on powders of a compound obtained as above were made by the powder x-ray diffraction method, whereupon it was confirmed that the powders represented a layered lithium multiple oxide expressed by chemical formula Li Ni_{1/3} Mn_{1/3}Co_{1/3}O₂.

Further, the lithium multiple oxide powders were found at 10 µm in average grain size, and at 0.35 m² / g in specific surface area, and Na content in the powders was in a range of 20 to 50 ppm while S content in the powders was not more than 20 ppm.

Then, examinations were conducted on the characteristics of a lithium secondary battery in which the lithium multiple oxide obtained as above was adopted as a cathode active material for the lithium secondary battery.

In conducting the examinations, slurry composed of 85 wt. % of the lithium multiple oxide obtained as the active material, 8 wt. % of acetylene black, and 7 wt. % of PVDF (polyvinylidene fluoride) was prepared by use of NMP (N - methyl - pyrrolidone) as a solvent, and the slurry was applied to a aluminum foil, to be subsequently dried before press forming, thereby having obtained a cathode sample for use in evaluation of the lithium secondary battery.

The lithium secondary battery for use in the evaluation was the coin-battery model of 2032 type wherein the cathode sample was used for the cathode thereof while a lithium foil was used for an opposite electrode thereof, and for an electrolyte thereof, use was made of a solvent where a ratio of EC (ethylene carbonate) / DMC (dimethyl crbonate) was at 1 : 1, in which LiPF₆ at 1 mol was dissolved.

Using the lithium secondary battery for the evaluation, discharge capacity, and current load performance (discharge capacity obtained at 0.5C / discharge capacity obtained at 0.2C) were examined, and examination results, together with results for other lithium secondary batteries, are shown in Table 1.

### (Working Example 7)

Lithium carbonate was dissolved into water to prepare an aqueous solution of lithium carbonate, into which carbon dioxide gas was blown, having thereby prepared 140 liter of an aqueous solution of lithium hydrogencarbonate with lithium carbonate concentration at 30 g /ℓ.

Subsequently, while stirring the aqueous solution of lithium hydrogencarbonate (at room temperature) at 300 rpm, 30 liter of an aqueous solution of a chloride of Ni, Mn, Co, and Al, with composition of Ni : Mn : Co : Al at 0.317 : 0.317 : 0.317 : 0.05 (the aqueous solution at room temperature, containing the chloride of Ni, Mn, Co, and Al, at 1.5 mol/ℓ in total concentration) was charged into the aqueous solution of lithium hydrogencarbonate at a rate of 30 ℓ/hr.

Next, through the intermediary of a vent pipe, air was passed at a flow rate of 10 ℓ/ min through the solution to which addition of the aqueous solution of the chloride was completed, and the carbon dioxide gas dissolved in the solution was driven out, having thereby raised a pH value from 6.6 to 8.2.

As a result of processing described, precipitate in fine particle form was precipitated in the solution, and upon examination of material in fine particle form, obtained by filtering and separating the precipitate to be subsequently further washed and dried, it was confirmed that the material in fine particle form was a multiple carbonate (part of Al being in the form of hydroxide) 7 µm in average grain size, with composition ofNi : Mn : Co : Al at 0.317 : 0.317 : 0.317 : 0.05.

Further, in the multiple carbonate, obtained as above, Na content was found in a range of 20 to 50 ppm, and S content was found at not more than 10 ppm. Subsequently, heat treatment at 650°C was applied to the multiple carbonate, obtained as above, for 15 hrs, whereupon there was obtained a multiple oxide 7 µm in average grain size, with composition of Ni : Mn: Co : Al at 0.317 : 0.317 : 0.317: 0.05.

By mixing 100 g of the multiple oxide with 45.2 g of lithium carbonate, a mixture was obtained, and the mixture was fired in the air at 1050°C for 5 hrs.

Measurements on powders of a compound obtained as above were made by the powder x-ray diffraction method, whereupon it was confirmed that the powders represented a layered lithium multiple oxide expressed by chemical formula Li Ni_{0.317}Mn_{0.317}Co_{0.317}Al_{0.05} O₂.

Further, the lithium multiple oxide powders were found at 7 µm in average grain size, and 0.41 m² / g in specific surface area, and Na content in the powders was in a range of 20 to 50 ppm while S content in the powders was not more than 10 ppm.

Then, examinations were conducted on the characteristics of a lithium secondary battery in which the lithium multiple oxide obtained as above was adopted as a cathode active material for the lithium secondary battery.

In conducting the examinations, slurry composed of 85 wt. % of the lithium multiple oxide obtained as the active material, 8 wt. % of acetylene black, and 7 wt. % of PVDF (polyvinylidene fluoride) was prepared by use of NMP (N - methyl - pyrrolidone) as a solvent, and the slurry was applied to a aluminum foil to be subsequently dried before press forming, thereby having obtained a cathode sample for use in evaluation of the lithium secondary battery.

The lithium secondary battery for use in the evaluation was the coin-battery model of 2032 type wherein the cathode sample was used for the cathode thereof while a lithium foil was used for an opposite electrode thereof, and for an electrolyte thereof, use was made of a solvent where a ratio of EC (ethylene carbonate) / DMC (dimethyl crbonate) was at 1 : 1, in which LiPF₆ at 1 mol was dissolved.

Using the lithium secondary battery for the evaluation, discharge capacity, and current load performance (discharge capacity obtained at 0.5C / discharge capacity obtained at 0.2C) were examined, and examination results, together with results for other lithium secondary batteries, are shown in Table 1.

It is evident from the results shown in Table 1 that according to the invention, it is possible to stably produce a cathode material with which there can be provided a lithium secondary battery excellent in both discharge capacity, and current load performance.

With the working examples described hereinbefore, there have been shown only examples involving the chloride containing Ni, Mn, and Co together, and the lithium multiple oxides, however, it has already been confirmed that similar excellent results can be obtained in the case of including the chloride containing Ni, Mn, or Co, alone, and the lithium multiple oxides, and the case of including the chloride containing at least two elements selected from the group consisting of Ni, Mn, and Co, and the lithium multiple oxides.

Further, with any of the working examples described hereinbefore, the chloride was subjected to the oxidation treatment, however, it has also been confirmed that similar results can be obtained even if the chloride is mixed directly with the lithium source to be subsequently fired.

Still further, there has been exhibited only Working Example 7 wherein Al has been added as an example in which other metal is added, it has also been confirmed that similar results can be obtained even in the case where at least one element selected from the group consisting of Mg, Al, Ti, Cr, Fe, Cu, and Zr is added

### INDUSTRIAL APPLICABILITY

The invention can provide a cathode material for a lithium secondary battery (a precursor material for production of a cathode active material, and the cathode active material), with which it is possible to implement a lithium secondary battery capable of exhibiting excellent battery performance, and a method of stably producing the same.

## Claims

1. A precursor material for a cathode material for a lithium secondary battery, being a mixture of carbonate expressed by chemical formula ACO₃ (where A is at least an element selected from the group consisting of Ni, Mn and Co), and either or both of carbonate expressed by chemical formula DCO₃ (where D is at least an element selected from the group consisting of Mg, Al, Ti, Cr, Fe, Cu, and Zr), and hydroxide expressed by chemical formula D(OH), an atomic ratio of an element D to the total of the element A and the element D {D / (A + D)) being in a range of 0 to 0.1, and further, respective contents of Na, and S, as impurity elements, being not more than 100 ppm in mass percentage.

2. A cathode material for a lithium secondary battery produced by use of the precursor material as set forth in claim 1, being an Li-A-D-O based multiple oxide for the lithium secondary battery (where A is at least an element selected from the group consisting of Ni, Mn and Co, and D is at least an element selected from the group consisting of Mg, Al, Ti, Cr, Fe, Cu, and Zr), an atomic ratio of the element D to the total of the element A and the element D {D / (A+ D)} being in a range of 0 to 0.1, and further, respective contents of Na, and S, as impurity elements, being not more than 100 ppm in mass percentage.

3. A method of producing a precursor material according to claim 1 for a cathode material for a lithium secondary battery, expressed by chemical formula ACO₃ (where A is at least an element selected from the group consisting of Ni, Mn and Co) with respective contents of Na, and S, as impurity elements, at not more than 100 ppm in mass percentage, said method comprising the steps of charging an aqueous solution containing at least one chloride selected from the group consisting of Ni chloride, Mn chloride, and Co chloride into lithium carbonate suspension, and precipitating carbonate.

4. The method of producing a precursor material for a cathode material for a lithium secondary battery according to claim 3, being a mixture of carbonate expressed by chemical formula ACO₃ (where A is at least an element selected from the group consisting of Ni, Mn and Co), and either or both of carbonate expressed by chemical formula DCO₃ (where D is at least an element selected from the group consisting of Mg, Al, Ti, Cr, Fe, Cu, and Zr), and hydroxide expressed by chemical formula D(OH), an atomic ratio of an element D to the total of the element A and the element D {D / (A + D)} being in a range of 0 to 0.1, and further, respective contents of Na and S, as impurity elements, being not more than 100 ppm in mass percentage, said method comprising the steps of charging a mixed liquid composed of an aqueous solution containing at least one chloride selected from the group consisting of Ni chloride, Mn chloride, and Co chloride, and an aqueous solution of at least one chloride selected from the group consisting of Mg chloride, Al chloride, Ti chloride, Cr chloride, Fe chloride, Cu chloride, and Zr chloride into lithium carbonate suspension, and precipitating carbonate, or carbonate, and hydroxide.

5. A method of producing a precursor material according to claim 1 for a cathode material for a lithium secondary battery, composed of a carbonate expressed by chemical formula ACO₃ (where A is at least an element selected from the group consisting of Ni, Mn and Co) with respective contents of Na and S, as impurity elements, at not more than 100 ppm in mass percentage, said method comprising the steps of preparing an aqueous solution of lithium hydrogencarbonate by blowing carbon dioxide gas into an aqueous solution of lithium carbonate, dripping an aqueous solution containing at least one chloride selected from the group consisting of Ni chloride, Mn chloride, and Co chloride to the aqueous solution of lithium hydrogencarbonate, or dripping or charging the aqueous solution of lithium hydrogencarbonate into the aqueous solution containing at least one chloride selected from the group consisting of Ni chloride, Mn chloride, and Co chloride, and subsequently driving out dissolved carbon dioxide gas by aerating the aqueous solution, thereby raising a pH value of the aqueous solution to cause carbonate to be precipitated.

6. The method of producing a precursor material for a cathode material for a lithium secondary battery according to claim 5, being a mixture of carbonate expressed by chemical formula ACO₃ (where A is at least an element selected from the group consisting of Ni, Mn and Co), and either or both of carbonate expressed by chemical formula DCO₃ (where D is at least an element selected from the group consisting of Mg, Al, Ti, Cr, Fe, Cu, and Zr), and hydroxide expressed by chemical formula D(OH), an atomic ratio of an element D to the total of the element A and the element D {D / (A + D)} being in a range of 0 to 0.1, and further, respective contents of Na and S, as impurity elements, being not more than 100 ppm in mass percentage, said method comprising the steps of preparing an aqueous solution of lithium hydrogencarbonate by blowing carbon dioxide gas into an aqueous solution of lithium carbonate, dripping a mixed liquid of an aqueous solution containing at least one chloride selected from the group consisting of Ni chloride, Mn chloride, and Co chloride, and an aqueous solution of at least one chloride selected from the group consisting of Mg chloride, Al chloride, Ti chloride, Cr chloride, Fe chloride, Cu chloride, and Zr chloride to the aqueous solution of lithium hydrogencarbonate, or dripping or charging the aqueous solution of lithium hydrogencarbonate into the mixed liquid of the aqueous solution containing at least one chloride selected from the group consisting of Ni chloride, Mn chloride, and Co chloride, and the aqueous solution of at least one chloride selected from the group consisting of Mg chloride, Al chloride, Ti chloride, Cr chloride, Fe chloride, Cu chloride, and Zr chloride, and subsequently, driving out dissolved carbon dioxide gas by aerating the aqueous solution, thereby raising a pH value of the aqueous solution to cause carbonate to be precipitated.

7. A method of producing a cathode material according to claim 2 for a lithium secondary battery, being an Li-A-D-O based multiple oxide for the lithium secondary battery (where A is at least an element selected from the group consisting of Ni, Mn and Co, and D is at least an element selected from the group consisting of Mg, Al, Ti, Cr, Fe, Cu, and Zr), an atomic ratio of the element D to the total of the element A and the element D{D/(A + D)} being in a range of 0 to 0.1, and further, respective contents of Na and S, as impurity elements, being not more than 100 ppm in mass percentage, said method comprising the steps of charging a mixed liquid of an aqueous solution containing at least one chloride selected from the group consisting of Ni chloride, Mn chloride, and Co chloride, and an aqueous solution of at least one chloride selected from the group consisting of Mg chloride, Al chloride, Ti chloride, Cr chloride, Fe chloride, Cu chloride, and Zr chloride into lithium carbonate suspension, thereby precipitating carbonate, or carbonate, and hydroxide, and subsequently, mixing precipitate as obtained with a lithium source before firing, or applying oxidation treatment to the precipitate as obtained to be turned into an oxide, the oxide being mixed with the lithium source before firing.

8. A method of producing a cathode material according to claim 2 for a lithium secondary battery, being an Li-A-D-O based a multiple oxide for the lithium secondary battery (where A is at least an element selected from the group consisting of Ni, Mn and Co, and D is at least an element selected from the group consisting of Mg, Al, Ti, Cr, Fe, Cu, and Zr), an atomic ratio of the element D to the total of the element A and the element D {D / (A + D)} being in a range of 0 to 0.1, and further, respective contents of Na and S, as impurity elements, being not more than 100 ppm in mass percentage, said method comprising the steps of preparing an aqueous solution of lithium hydrogencarbonate by blowing carbon dioxide gas into an aqueous solution of lithium carbonate, dripping a mixed liquid of an aqueous solution containing at least one chloride selected from the group consisting of Ni chloride, Mn chloride, and Co chloride, and an aqueous solution of at least one chloride selected from the group consisting of Mg chloride, Al chloride, Ti chloride, Cr chloride, Fe chloride, Cu chloride, and Zr chloride to the aqueous solution of lithium hydrogencarbonate, or dripping or charging the aqueous solution of lithium hydrogencarbonate into the mixed liquid of the aqueous solution containing at least one chloride selected from the group consisting of Ni chloride, Mn chloride, and Co chloride, and the aqueous solution of at least one chloride selected from the group consisting of Mg chloride, Al chloride, Ti chloride, Cr chloride, Fe chloride, Cu chloride, and Zr chloride, subsequently, driving out dissolved carbon dioxide gas by aerating the aqueous solution, thereby raising a pH value of the aqueous solution to cause carbonate, or carbonate and hydroxide to be precipitated, and mixing precipitate as obtained with a lithium source before firing, or applying oxidation treatment to the precipitate as obtained to be turned into an oxide, the oxide being mixed with the lithium source before firing.

## Patentansprüche

1. Vorstufenmaterial für ein Kathodenmaterial für eine Lithiumsekundärbatterie, welches eine Mischung aus Carbonat, ausgedrückt durch chemische Formel ACO₃ (wobei A wenigstens ein Element ausgewählt aus der Gruppe bestehend aus Ni, Mn und Co ist), und einem oder beiden von Carbonat, ausgedrückt durch chemische Formel DCO₃ (wobei D wenigstens ein Element ausgewählt aus der Gruppe bestehend aus Mg, Al, Ti, Cr, Fe, Cu und Zr ist), und Hydroxid, ausgedrückt durch chemische Formel D(OH) ist, wobei ein Atomverhältnis eines Elements D zu der Gesamtheit des Elements A und des Elements D {D/(A + D)} in einem Bereich von 0 bis 0,1 ist, und wobei ferner entsprechende Gehalte von Na und S als Verunreinigungselemente nicht mehr als 100 ppm in Massenprozentanteil sind.

2. Kathodenmaterial für eine Lithiumsekundärbatterie, hergestellt durch Verwendung des Vorstufenmaterials nach Anspruch 1, welches ein Mehrfachoxid auf Li-A-D-O-Basis ist, für die Lithiumsekundärbatterie (wobei A wenigstens ein Element ausgewählt aus der Gruppe bestehend aus Ni, Mn und Co ist, und D wenigstens ein Element ausgewählt aus der Gruppe bestehend aus Mg, Al, Ti, Cr, Fe, Cu und Zr ist), wobei ein Atomverhältnis des Elements D zu der Gesamtheit des Elements A und des Elements D {D/(A + D)} in einem Bereich von 0 bis 0,1 ist, und wobei ferner entsprechende Gehalte von Na und S als Verunreinigungselemente nicht mehr als 100 ppm in Massenprozentanteil sind.

3. Verfahren zum Herstellen eines Vorstufenmaterials nach Anspruch 1 für ein Kathodenmaterial für eine Lithiumsekundärbatterie, ausgedrückt durch chemische Formel ACO₃ (wobei A wenigstens ein Element ausgewählt aus der Gruppe bestehend aus Ni, Mn und Co ist) mit entsprechenden Gehalten von Na und S als Verunreinigungselemente von nicht mehr als 100 ppm in Massenprozentanteil, wobei das Verfahren die Schritte eines Ladens einer wässrigen Lösung enthaltend wenigstens ein Chlorid ausgewählt aus der Gruppe bestehend aus Ni-Chlorid, Mn-Chlorid und Co-Chlorid in Lithiumcarbonatsuspension und eines Ausfällens von Carbonat umfasst.

4. Verfahren zum Herstellen eines Vorstufenmaterials für ein Kathodenmaterial für eine Lithiumsekundärbatterie nach Anspruch 3, welches eine Mischung aus Carbonat, ausgedrückt durch chemische Formel ACO₃ (wobei A wenigstens ein Element ausgewählt aus der Gruppe bestehend aus Ni, Mn und Co ist), und einem oder beiden von Carbonat, ausgedrückt durch chemische Formel DCO₃ (wobei D wenigstens ein Element ausgewählt aus der Gruppe bestehend aus Mg, Al, Ti, Cr, Fe, Cu und Zr ist), und Hydroxid, ausgedrückt durch chemische Formel D(OH) ist, wobei ein Atomverhältnis eines Elements D zu der Gesamtheit des Elements A und des Elements D {D/(A + D)} in einem Bereich von 0 bis 0,1 ist, und wobei ferner entsprechende Gehalte von Na und S als Verunreinigungselemente nicht mehr als 100 ppm in Massenprozentanteil sind, wobei das Verfahren die Schritte umfasst eines Beladens einer gemischten Flüssigkeit zusammengesetzt aus einer wässrigen Lösung enthaltend wenigstens ein Chlorid ausgewählt aus der Gruppe bestehend aus Ni-Chlorid, Mn-Chlorid und Co-Chlorid und einer wässrigen Lösung wenigstens eines Chlorids ausgewählt aus der Gruppe bestehend aus Mg-Chlorid, Al-Chlorid, Ti-Chlorid, Cr-Chlorid, Fe-Chlorid, Cu-Chlorid und Zr-Chlorid in Lithiumcarbonatsuspension und eines Ausfällens von Carbonat oder Carbonat und Hydroxid.

5. Verfahren zum Herstellen eines Vorstufenmaterials nach Anspruch 1 für ein Kathodenmaterial für eine Lithiumsekundärbatterie, zusammengesetzt aus einem Carbonat, ausgedrückt durch chemische Formel ACO₃ (wobei A wenigstens ein Element ausgewählt aus der Gruppe bestehend aus Ni, Mn und Co ist) mit entsprechenden Gehalten von Na und S als Verunreinigungselemente von nicht mehr als 100 ppm in Massenprozentanteil, wobei das Verfahren umfasst die Schritte eines Herstellens einer wässrigen Lösung von Lithiumhydrogencarbonat durch Blasen von Kohlenstoffdioxidgas in eine wässrige Lösung von Lithiumcarbonat, Tropfen einer wässrigen Lösung enthaltend wenigstens ein Chlorid ausgewählt aus der Gruppe bestehend aus Ni-Chlorid, Mn-Chlorid und Co-Chlorid zu der wässrigen Lösung von Lithiumhydrogencarbonat oder Tropfen oder Beladen der wässrigen Lösung von Lithiumhydrogencarbonat in die wässrige Lösung enthaltend wenigstens ein Chlorid ausgewählt aus der Gruppe bestehend aus Ni-Chlorid, Mn-Chlorid und Co-Chlorid, und eines anschließenden Austreibens von aufgelöstem Kohlenstoffdioxidgas durch Belüften der wässrigen Lösung, dadurch anhebend einen pH-Wert der wässrigen Lösung, um eine Ausfällung von Carbonat zu verursachen.

6. Verfahren zum Herstellen eines Vorstufenmaterials für ein Kathodenmaterial für Lithiumsekundärbatterie nach Anspruch 5, welches eine Mischung aus Carbonat, ausgedrückt durch chemische Formel ACO₃ (wobei A wenigstens ein Element ausgewählt aus der Gruppe bestehend aus Ni, Mn und Co ist), und einem oder beiden von Carbonat, ausgedrückt durch chemische Formel DCO₃ (wobei D wenigstens ein Element ausgewählt aus der Gruppe bestehend aus Mg, Al, Ti, Cr, Fe, Cu und Zr ist), und Hydroxid, ausgedrückt durch chemische Formel D(OH) ist, wobei ein Atomverhältnis eines Elements D zu der Gesamtheit des Elements A und des Elements D {D/(A + D)} in einem Bereich von 0 bis 0,1 ist, und wobei ferner entsprechende Gehalte von Na und S als Verunreinigungselemente nicht mehr als 100 ppm in Massenprozentanteil sind, wobei das Verfahren die Schritte umfasst eines Herstellens einer wässrigen Lösung aus Lithiumhydrogencarbonat durch Blasen von Kohlenstoffdioxidgas in eine wässrige Lösung von Lithiumcarbonat, Tropfen einer gemischten Lösung einer wässrigen Lösung enthaltend wenigstens ein Chlorid ausgewählt aus der Gruppe bestehend aus Ni-Chlorid, Mn-Chlorid und Co-Chlorid und einer wässrigen Lösung wenigstens eines Chlorids ausgewählt aus der Gruppe bestehend aus Mg-Chlorid, Al-Chlorid, Ti-Chlorid, Cr-Chlorid, Fe-Chlorid, Co-Chlorid und Zr-Chlorid zu der wässrigen Lösung von Lithiumhydrogencarbonat, oder Tropfen oder Beladen der wässrigen Lösung von Lithiumhydrogencarbonat in die gemischte Flüssigkeit der wässrigen Lösung enthaltend wenigstens ein Chlorid ausgewählt aus der Gruppe bestehend aus Ni-Chlorid, Mn-Chlorid und Co-Chlorid und der wässrigen Lösung wenigstens eines Chlorids ausgewählt aus der Gruppe bestehend aus Mg-Chlorid, Al-Chlorid, Ti-Chlorid, Cr-Chlorid, Fe-Chlorid, Co-Chlorid und Zr-Chlorid, und anschließend Austreiben von aufgelöstem Kohlenstoffdioxidgas durch Belüften der wässrigen Lösung, dadurch anhebend einen pH-Wert der wässrigen Lösung, um eine Ausfällung von Carbonat zu verursachen.

7. Verfahren zum Herstellen eines Kathodenmaterials nach Anspruch 2 für eine Lithiumsekundärbatterie, welches ein Mehrfachoxid auf Li-A-D-O-Basis ist, für die Lithiumsekundärbatterie (wobei A wenigstens ein Element ausgewählt aus der Gruppe bestehend aus Ni, Mn und Co ist und D wenigstens ein Element ausgewählt aus der Gruppe bestehend aus Mg, Al, Ti, Cr, Fe, Cu und Zr ist), wobei ein Atomverhältnis des Elements D zu der Gesamtheit des Elements A und des Elements D {D/(A + D)} in einem Bereich von 0 bis 0,1 ist, und wobei ferner entsprechende Gehalte von Na und S als Verunreinigungselemente nicht mehr als 100 ppm in Massenprozentanteil sind, wobei das Verfahren die Schritte umfasst eines Beladens einer gemischten Flüssigkeit einer wässrigen Lösung enthaltend wenigstens ein Chlorid ausgewählt aus der Gruppe bestehend aus Ni-Chlorid, Mn-Chlorid und Co-Chlorid und einer wässrigen Lösung wenigstens eines Chlorids ausgewählt aus der Gruppe bestehend aus Mg-Chlorid, Al-Chlorid, Ti-Chlorid, Cr-Chlorid, Fe-Chlorid, Co-Chlorid und Zr-Chlorid in Lithiumcarbonatsuspension, dadurch ausfällend Carbonat oder Carbonat und Hydroxid, und anschließend Mischen des erhaltenen Niederschlags mit einer Lithiumquelle vor einem Brennen, oder Anwenden einer Oxidationsbehandlung auf den so erhaltenen Niederschlag, um in ein Oxid umgewandelt zu werden, und wobei das Oxid mit der Lithiumquelle vor dem Brennen gemischt wird.

8. Verfahren zum Herstellen eines Kathodenmaterials nach Anspruch 2 für eine Lithiumsekundärbatterie, welches ein Mehrfachoxid auf Li-A-D-O-Basis ist, für die Lithiumsekundärbatterie (wobei A wenigstens ein Element ausgewählt aus der Gruppe bestehend aus Ni, Mn und Co ist und D wenigstens ein Element ausgewählt aus der Gruppe bestehend aus Mg, Al, Ti, Cr, Fe, Cu und Zr ist), wobei ein Atomverhältnis des Elements D zu der Gesamtheit des Elements A und des Elements D {D/(A + D)} in einem Bereich von 0 bis 0,1 ist, und wobei ferner entsprechende Gehalte von Na und S als Verunreinigungselemente nicht mehr als 100 ppm in Massenprozentanteil sind, wobei das Verfahren die Schritte umfasst eines Herstellens einer wässrigen Lösung von Lithiumhydrogencarbonat durch Einblasen von Kohlendioxidgas in eine wässrige Lösung von Lithiumcarbonat, Tropfen einer gemischten Flüssigkeit einer wässrigen Lösung enthaltend wenigstens ein Chlorid ausgewählt aus der Gruppe bestehend aus Ni-Chlorid, Mn-Chlorid und Co-Chlorid und einer wässrigen Lösung wenigstens eines Chlorids ausgewählt aus der Gruppe bestehend aus Mg-Chlorid, Al-Chlorid, Ti-Chlorid, Cr-Chlorid, Fe-Chlorid, Co-Chlorid und Zr-Chlorid zu der wässrigen Lösung von Lithiumhydrogencarbonat, oder Tropfen oder Beladen der wässrigen Lösung von Lithiumhydrogencarbonat in die gemischte Flüssigkeit der wässrigen Lösung enthaltend wenigstens ein Chlorid ausgewählt aus der Gruppe bestehend aus Ni-Chlorid, Mn-Chlorid und Co-Chlorid und der wässrigen Lösung wenigstens eines Chlorids ausgewählt aus der Gruppe bestehend aus Mg-Chlorid, Al-Chlorid, Ti-Chlorid, Cr-Chlorid, Fe-Chlorid, Co-Chlorid und Zr-Chlorid, anschließendes Austreiben von aufgelöstem Kohlendioxidgas durch Belüften der wässrigen Lösung, dadurch anhebend einen pH-Wert der wässrigen Lösung, um die Ausfällung von Carbonat oder Carbonat und Hydroxid zu verursachen, und Mischen des so erhaltenen Niederschlags mit einer Lithiumquelle vor einem Brennen, oder Beaufschlagen einer Oxidationsbehandlung auf den so erhaltenen Niederschlag, um in ein Oxid umgewandelt zu werden, und wobei das Oxid mit der Lithiumquelle vor dem Brennen gemischt wird.

## Revendications

1. Précurseur pour matériau de cathode destiné à une batterie secondaire au lithium, comportant un mélange de carbonate exprimé par la formule chimique ACO₃ (où A représente au moins l'un des éléments sélectionnés dans le groupe composé de Ni, de Mn et de Co) et l'un ou l'autre ou bien les deux carbonates exprimés par la formule chimique DCO₃ (où D représente au moins l'un des éléments sélectionnés dans le groupe composé de Mg, de Al, de Ti, de Cr, de Fe, de Cu et de Zr), et d'hydroxyde exprimé par la formule chimique D(OH, un rapport atomique entre un élément D et la totalité de l'élément A et de l'élément D / (A + D)) compris entre 0 et 0,1 et par ailleurs, le contenu respectif de Na et de S, qui sont des éléments d'impureté ne dépassant pas 100 ppm en pourcentage de masse.

2. Matériau de cathode destiné à une batterie secondaire au lithium produit par l'usage du précurseur décrit dans la revendication 1, comportant un oxyde multiple basé sur Li-A-D-O pour la batterie secondaire au lithium (où A représente au moins l'un des éléments sélectionnés dans le groupe composé de Ni, de Mn et de Co et D représente au moins l'un des éléments sélectionnés dans le groupe composé de Mg, de Al, de Ti, de Cr, de Fe, de Cu et de Zr), un rapport atomique entre l'élément D et la totalité de l'élément A et de l'élément D / (A + D)) étant compris entre 0 et 0,1 et, par ailleurs, le contenu respectif de Na et de S, qui sont des éléments d'impureté ne dépassant pas 100 ppm en pourcentage de masse.

3. Procédé de production d'un précurseur selon la revendication 1 pour un matériau de cathode destiné à une batterie secondaire au lithium, exprimé par la formule chimique ACO₃ (où A représente au moins l'un des éléments sélectionnés dans le groupe composé de Ni, de Mn et de Co), avec le contenu respectif de Na et de S, qui sont des éléments d'impureté, d'impureté ne dépassant pas 100 ppm en pourcentage de masse, le procédé comportant les étapes qui consistent à charger une solution aqueuse qui contient au moins un chlorure sélectionné dans le groupe composé de chlorure de Ni, de chlorure de Mn, et de chlorure de Co en suspension de carbonate de lithium, et à précipiter le carbonate.

4. Procédé de production d'un précurseur pour matériau de cathode destiné à une batterie secondaire au lithium selon la revendication 3, comportant un mélange de carbonate exprimé par la formule chimique ACO₃ (où A représente au moins l'un des éléments sélectionnés dans le groupe composé de Ni, de Mn et de Co) et l'un ou l'autre ou bien les deux carbonates exprimés par la formule chimique DCO₃ (où D représente au moins l'un des éléments sélectionnés dans le groupe composé de Mg, de Al, de Ti, de Cr, de Fe, de Cu et de Zr), et d'hydroxyde exprimé par la formule chimique D(OH), un rapport atomique entre un élément D et la totalité de l'élément A et de l'élément D / (A + D)) étant compris entre 0 et 0,1 et, par ailleurs le contenu respectif de Na et de S, qui sont des éléments d'impureté ne dépassant pas 100 ppm en pourcentage de masse, le procédé comportant les étapes qui consistent à charger un liquide mixte composé d'une solution aqueuse qui contient au moins un chlorure sélectionné dans le groupe composé de chlorure de Ni, de chlorure de Mn, et de chlorure de Co, et d'une solution aqueuse d'au moins l'un des chlorures sélectionné dans le groupe composé de chlorure de Mg, de chlorure de Al, de chlorure de Ti, de chlorure de Cr, de chlorure de Fe, de chlorure de Cu, et de chlorure de Zr dans une suspension de carbonate de lithium, et précipitant du carbonate, ou du carbonate, et de l'hydroxyde,

5. Procédé de production d'un précurseur selon la revendication 1 pour matériau de cathode destiné à une batterie secondaire au lithium, composé d'un carbonate exprimé par la formule chimique ACO₃ (où A représente au moins l'un des éléments sélectionnés dans le groupe composé de Ni, de Mn et de Co) le contenu respectif de Na et de S, qui sont des éléments d'impureté, ne dépassant pas 100 ppm en pourcentage de masse, le procédé comportant les étapes qui consistent à préparer une solution aqueuse d'hydrogènecarbonate de lithium en soufflant du gaz carbonique dans une solution aqueuse de carbonate de lithium, en faisant s'égoutter une solution aqueuse qui contient au moins un chlorure sélectionné dans le groupe composé de chlorure de Ni, de chlorure de Mn, et de chlorure de Co dans la solution aqueuse de carbonate d'hydrogènecarbonate, ou bien en faisant s'égoutter ou en chargeant la solution aqueuse qui contient au moins un chlorure sélectionné dans le groupe composé de chlorure de Ni, de chlorure de Mn, et de chlorure de Co, et, par la suite, en chassant le gaz carbonique dissous en aérant la solution aqueuse, ce qui a pour effet d'élever la valeur du pH de la solution aqueuse conduisant ainsi à la précipitation du carbonate.

6. Procédé de production d'un précurseur selon la revendication pour matériau de cathode destiné à une batterie secondaire au lithium selon la revendication 5, composé d'un mélange de carbonate exprimé par la formule chimique ACO₃ (où A représente au moins l'un des éléments sélectionnés dans le groupe composé de Ni, de Mn et de Co) et l'un ou l'autre ou bien les deux carbonates exprimés par la formule chimique DCO₃ (où D représente au moins l'un des éléments sélectionnés dans le groupe composé de Mg, de Al, de Ti, de Cr, de Fe, de Cu et de Zr), et l'hydroxyde exprimé par la formule chimique D(OH), un rapport atomique entre l'élément D et la totalité de l'élément A, et de l'élément D / (A + D)) étant compris entre 0 et 0,1 et, par ailleurs le contenu respectif de Na et de S, qui sont des éléments d'impureté, ne dépassant pas 100 ppm en pourcentage de masse, le procédé comportant les étapes qui consistent à préparer une solution aqueuse d'hydrogènecarbonate de lithium en soufflant du gaz carbonique dans une solution aqueuse de carbonate de lithium, en faisant s'égoutter un liquide mixte qui comprend une solution aqueuse contenant au moins un chlorure sélectionné dans le groupe composé de chlorure de Ni, de chlorure de Mn, et de chlorure de Co, et une solution aqueuse d'au moins un chlorure sélectionné dans le groupe composé de chlorure de Mg, de chlorure de Al, de chlorure de Ti, de chlorure de Cr, de chlorure de Fe, de chlorure de Cu et de chlorure de Zr dans la solution aqueuse de carbonate d'hydrogènecarbonate de lithium, ou bien en faisant s'égoutter ou en charger la solution aqueuse d'hydrogènecarbonate de lithium dans le liquide mixte de la solution aqueuse qui contient au moins un chlorure sélectionné dans le groupe composé de chlorure de Ni, de chlorure de Mn, et de chlorure de Co, et la solution aqueuse d'au moins un chlorure sélectionné dans le groupe composé de chlorure de Mg, de chlorure de Al, de chlorure de Ti, de chlorure de Cr, de chlorure de Fe, de chlorure de Cu et de chlorure de Zr, et, par la suite, en chassant le gaz carbonique dissous en aérant la solution aqueuse, ce qui a pour effet d'élever la valeur du pH de la solution aqueuse conduisant ainsi à la précipitation du carbonate.

7. Procédé de production selon la revendication 2 d'un matériau de cathode destiné à une batterie secondaire au lithium qui est composé d'un oxyde multiple à base de LiA-D-O destiné à la batterie secondaire au lithium (où A représente au moins l'un des éléments sélectionnés dans le groupe composé de Ni, de Mn et de Co, et D représente au moins l'un des éléments sélectionnés dans le groupe composé de Mg, de Al, de Ti, de Cr, de Fe, de Cu et de Zr), un rapport atomique entre l'élément D et la totalité de l'élément A et de l'élément D / (A + D)) étant compris entre 0 et 0,1 et, par ailleurs, le contenu respectif de Na et de S, qui sont des éléments d'impureté ne dépassant pas 100 ppm en pourcentage de masse, le procédé comportant les étapes qui consistent à charger le liquide mixte d'une solution aqueuse qui contient au moins un chlorure sélectionné dans le groupe composé de chlorure de Ni, de chlorure de Mn, et de chlorure de Co, et une solution aqueuse qui contient au moins un chlorure sélectionné dans le groupe composé de chlorure de Mg, de chlorure de Al, de chlorure de Ti, de chlorure de Cr, de chlorure de Fe, de chlorure de Cu, et de chlorure de Zr en suspension de carbonate de lithium, provoquant ainsi la précipitation du carbonate, ou du carbonate et de l'hydroxyde, et par la suite le mélange de la précipitation obtenue avec une source de lithium avant la mise à feu, ou appliquant le traitement d'oxydation au précipité obtenu pour le convertir en oxyde, l'oxyde étant mélangé avec la source de lithium avant la mise à feu.

8. Procédé de production d'un précurseur selon la revendication 2 pour matériau de cathode destiné à une batterie secondaire au lithium, lithium qui est composé d'un oxyde multiple à base de Li-A-D-O pour la batterie secondaire au lithium (où A représente au moins l'un des éléments sélectionnés dans le groupe composé de Ni, de Mn et de Co et D représente au moins l'un des éléments sélectionnés dans le groupe composé de Mg, de Al, de Ti, de Cr, de Fe, de Cu et de Zr), un rapport atomique de l'élément D et la totalité de l'élément A et de l'élément D / (A + D)) étant compris entre 0 et 0,1 et, par ailleurs, le contenu respectif de Na et de S, qui sont des éléments d'impureté ne dépassant pas 100 ppm en pourcentage de masse, le procédé comportant les étapes qui consistent à préparer une solution aqueuse d'hydrogènecarbonate de lithium en soufflant du gaz carbonique dans une solution aqueuse de carbonate de lithium, en faisant s'égoutter un liquide mixte de solution aqueuse qui contient au moins un chlorure sélectionné dans le groupe composé de chlorure de Ni, de chlorure de Mn, et de chlorure de Co, et une solution aqueuse qui contient au moins un chlorure sélectionné dans le groupe composé de chlorure de Mg, de chlorure de Al, de chlorure de Ti, de chlorure de Cr, de chlorure de Fe, de chlorure de Cu, et de chlorure de Zr ajouté à la solution aqueuse d'hydrogènecarbonate de lithium, ou bien en faisant s'égoutter ou en chargeant la solution aqueuse d'hydrogènecarbonate de lithium dans le liquide mixte de solution aqueuse qui contient au moins un chlorure sélectionné dans le groupe composé de chlorure de Ni, de chlorure de Mn, et de chlorure de Co, et la solution aqueuse qui contient au moins un chlorure sélectionné dans le groupe composé de chlorure de Mg, de chlorure de Al, de chlorure de Ti, de chlorure de Cr, de chlorure de Fe, de chlorure de Cu, et de chlorure de Zr et, par la suite, en chassant le gaz carbonique dissous en aérant la solution aqueuse, ce qui a pour effet d'élever la valeur du pH de la solution aqueuse provoquant ainsi la précipitation du carbonate, ou du carbonate et de l'hydroxyde, et par la suite le mélange de la précipitation obtenue avec une source de lithium avant la mise à feu, ou appliquant l'oxydation à la précipitation obtenue afin de la convertir en oxyde, cet oxyde étant mélangé avec la source de lithium avant la mise à feu.
